# EUROPEAN PATENT APPLICATION

(11) **EP 4 420 573 A1**
(43) Date of publication of application: **28.08.2024**
(21) Application number: 23020095.8
(22) Date of filing: 24.02.2023
(51) Int. Cl.: A47J 37/06, A47J 37/08, A47J 37/07

(54) **ROTATABLE TOASTER/GRILL/OVEN**

(71) Applicant: Kay, Thomas Howarth, 03590 Alicante (ES)
(72) Inventor: Kay, Thomas Howarth, 03590 Alicante (ES)

(57) **Abstract**

A cooking device incorporated with a toaster like body (1) which facilitates the preparation of both toast and food through slots (2) which have four heating elements. The device can be utilised in either a vertical or horizontal position by rotating it (9 and 10) between the two axes (11). This dual functionality allows for easier preparation of common food items and also means a smaller footprint. This invention will reduce expenditure on two alternative items (toaster and grill) and will be particularly useful for single people.

## Description

The present invention relates to a toaster like device which, when used in an upright position, functions as a normal toaster but which tilts horizontally to also function as a coocker/grill with wither or both top and bottom heating elements utilized, depending on the foos being cooked.

### Technical field to which invention relates:

The present invention relates to the cooking of food.

### Indication of background art:

Toasters for bread are common and are utilised in an uprignt position, There also exists grills either in ovens or as stand-alone devices which are configured horizontally. In both cases, there is no facility to alter the orientation of these devices.

### Technical problem to be solved:

The present invention allows the orientation of the toasting and grilling/cooking functions to be used so as to provide the possibility that bread and other food can be prepared on one device

### Disclosure of invention:

The present invention is a Rotatable Toaster/Grill/Oven which provides for the preparation of toast and other foods (such as sausages, bacon, eggs, pizza, hamburgers, steak etc) within the one unit. It also has the footprint (more or less) of a normal toaster, thereby saving space. It should also be more economical to use as it will be powered by Nichrome: Most resistance wire heating elements usually use nichrome 80/20 (80% Nickel, 20% Chromium) wire, ribbon, or strip. Nichrome 80/20 is an ideal material, because it has relatively high resistance and forms an adherent layer of chromium oxide when it is heated for the first time. That is not to say that, during development alternative heating elements may be utilised. This invention has an advantage over the existing art in that it carries out the main functions they separately provide within one unit.

### Drawings:

FIG 1 shows two perspectives of the device indicating the placement of the components.
FIG 2 indicates the mechanism whereby the device is oriented from vertical to horizontal. Drawings contd.
FIG 3 shows the storage trays removed from the device to be utilised for preparing food along with two spatter guards.
Fig 4 indicates that, with the inclusion of a microchip, the device can be controlled using an app.

### Description of at least one way of carrying out the invention:

It is anticipated that the invention would be manufactured largely using existing methods of assembling toasters and grills. Therefore, in reference to the drawings, it should be borne in mind that the placement of components may vary if demanded by the manufacturing process.

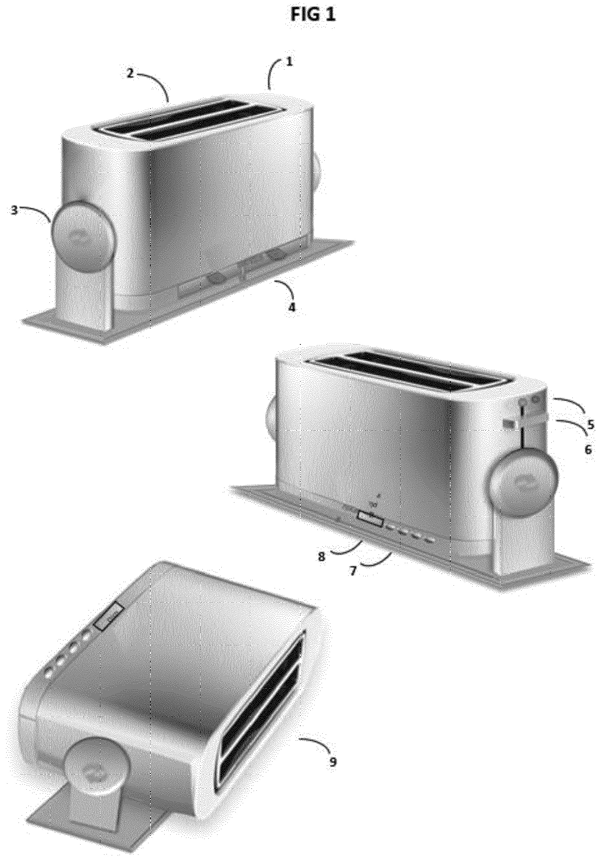

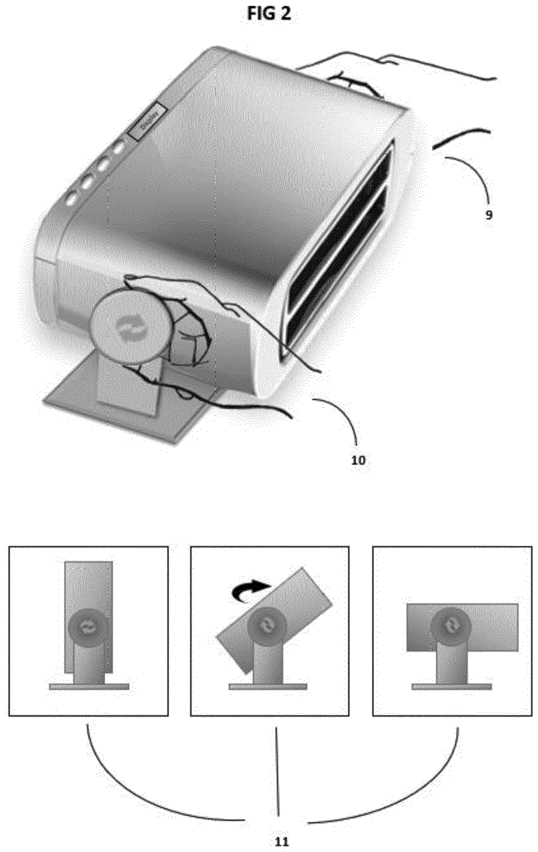

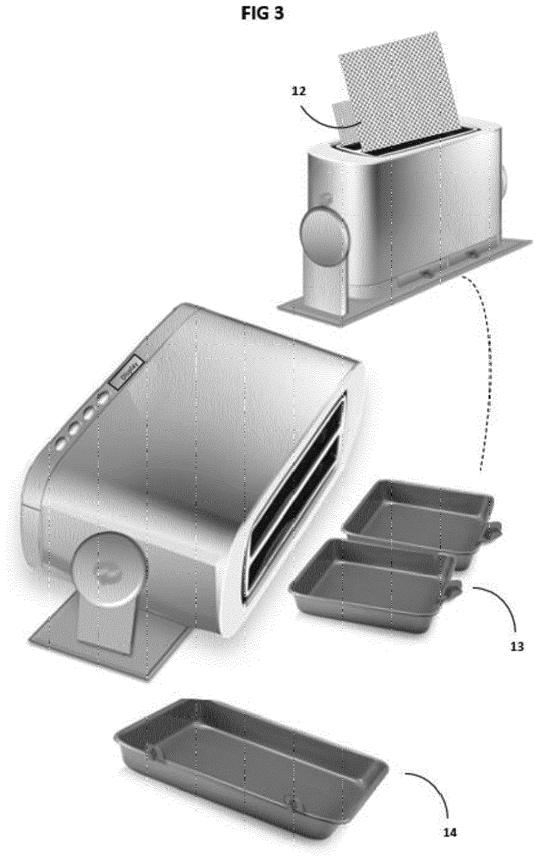

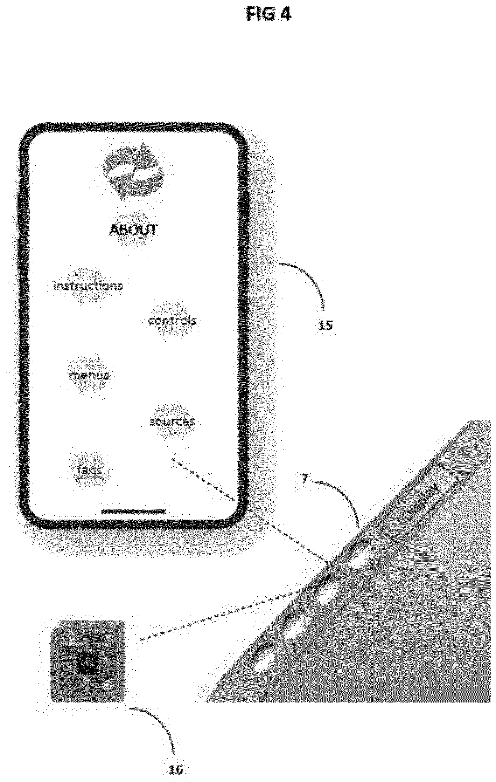

Referring to the drawings FIGS 1-4, the body 1 contains two cooking slots 2 a wheel for re-orienteering device 3 two cooking pans incorporated into the device 4 the toaster function indicators 5 the slide for locating toast within the device 6 controls for the horizontal cooking function 7 and a display to indicate which function is being utilised. In reference to the cooking slots, there are four (two in each slot) and can be activated individually depending on the food being prepared. For example, to melt cheese on toast only one of the heating elements will be activated above the cheese. The same for frying an egg except the heating element below would be activated. But if sausages or hamburgers etc are to be cooked, two (one above, one below) heating elements would be activated.

9 shows the horizontal position and 10 show the wheel to re-orientate the device and 11 shows the transition between vertical to horizontal. 12 shows two spatter guards which prevent the oil or fat reaching the heating elements. Only testing will indicate whether these are necessary. The cooking pans which are incorporated into the device 13 ready for insertion into the cooking slots and have retractable handles to avoid touching the pans and 14, an optional larger pan which may be supplied separately.

Nowadays, consumers expect to be able to control equipment, especially electrical equipment to be controlled through a app on a smartphone. So it is with this device which will have a microchip 16 which will be incorporated into the controls 7 which will allow the user to either simply control which elements are activated depending on what function or to program in a sequence to cook a menu item as well the app providing other useful information.

Although the invention has been explained in relation to its preferred embodiment(s) as mentioned above, it is to be understood that many other possible modifications and variations can be made without departing from the scope of the present invention. It is, therefore, contemplated that the appended claim or claims will cover such modifications and variations that fall within the true scope of the invention.

## Claims

1. A Rotatable Toaster/Grill/Oven capable of being utilised in a vertical or horizontal manner to facilitate both toasting and cooking.

2. A Rotatable Toaster/Grill/Oven in accordance with Claim 1 capable of handling larger sized cooking pans.

3. A Rotatable Toaster/Grill/Oven in accordance with Claim 1 with variable heating elements

4. A Rotatable Toaster/Grill/Oven in accordance with Claim 1 with a lever (or two levers) to replace rotational discs.

5. A Rotatable Toaster/Grill/Oven in accordance with Claim 1 with adjustable internal 'bread holding springs.

6. A Rotatable Toaster/Grill/Oven in accordance with Claim 1 with an inbuilt self-cleaning system

7. A Rotatable Toaster/Grill/Oven in accordance with Claim 1 within built timer to provide alert when cooking is finished.
